# EUROPÄISCHE PATENTANMELDUNG

(11) **EP 4 079 129 A1**
(43) Veröffentlichungstag der Anmeldung: **26.10.2022**
(21) Anmeldenummer: 22163138.5
(22) Anmeldetag: 21.03.2022
(51) Int. Cl.: A01B 79/00, B62D 49/06, B60R 1/00, G02B 27/01, B60K 37/00, B60R 11/00

(54) **VERFAHREN ZUR WAHRNEHMUNG EINER ERWEITERTEN REALITÄT FÜR EIN LANDWIRTSCHAFTLICHES NUTZFAHRZEUG**

(30) Priorität: 14.04.2021 DE 102021109330
(71) Anmelder: Deere & Company, Moline, IL 61265 (US)
(72) Erfinder: FRITZ, Norbert, 68163 Mannheim (DE); DENKER, Stephan, 68163 Mannheim (DE)
(74) Vertreter: Dehnhardt, Florian Christopher

(57) **Zusammenfassung**

Die Erfindung betrifft ein Verfahren zur Wahrnehmung einer erweiterten Realität während eines Arbeitseinsatzes eines landwirtschaftlichen Nutzfahrzeuges (10). Dabei werden Daten (D_agr, D_arb, D_geo, D_log, D_or, D_pos, pos(k), w(k)) eines Datenkommunikationssystems (12) des landwirtschaftlichen Nutzfahrzeugs (10) in einer Steuereinheit (14, 14') verarbeitet. Die Steuereinheit (14, 14') sendet verarbeitete Daten (D_opt) an eine Wahrnehmungsvorrichtung (16, 16'). Die Wahrnehmungsvorrichtung (16, 16') projiziert von der Steuereinheit (14, 14') empfangene Daten (D_opt) als eine optische Information (I_opt) derart, dass mittels der Wahrnehmungsvorrichtung (16, 16') die reale Umgebung des landwirtschaftlichen Nutzfahrzeugs (10) und die projizierte optische Information (I_opt) gemeinsam wahrnehmbar sind.

## Beschreibung

Die Erfindung betrifft ein Verfahren zur Wahrnehmung einer erweiterten Realität für ein landwirtschaftliches Nutzfahrzeug.

Bei der Vorbereitung und Durchführung landwirtschaftlicher Arbeitseinsätze wird die Menge der zu verarbeitenden Daten immer größer. Entsprechend ist der Benutzer oder Fahrzeugführer des landwirtschaftlichen Nutzfahrzeugs während seiner eigentlichen landwirtschaftlichen Tätigkeit mit einer zunehmend komplexeren Handhabung von umfangreichen Informationen und Daten konfrontiert.

Es ist daher Aufgabe der vorliegenden Erfindung, einen landwirtschaftlichen Arbeitseinsatz hinsichtlich des Datenmanagements zu entlasten.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 ermöglicht das Verfahren die Wahrnehmung einer erweiterten Realität während eines Arbeitseinsatzes eines landwirtschaftlichen Nutzfahrzeugs (z.B. Traktor, Erntemaschine). Hierbei werden Daten eines Datenkommunikationssystems (z.B. CAN-Bus) des landwirtschaftlichen Nutzfahrzeugs in einer Steuereinheit verarbeitet. Diese Steuereinheit sendet verarbeitete Daten an eine Wahrnehmungsvorrichtung. Insbesondere sendet die Steuereinheit die verarbeiteten Daten als optische Daten (z.B. Bilddaten) an die Wahrnehmungsvorrichtung.

Die Wahrnehmungsvorrichtung projiziert von der Steuereinheit empfangene Daten als eine optische Information. Die Projektion erfolgt derart, dass mittels der Wahrnehmungsvorrichtung die reale Umgebung des landwirtschaftlichen Nutzfahrzeugs und die projizierte optische Information für einen Betrachter (z.B. Fahrer des landwirtschaftlichen Nutzfahrzeugs) gemeinsam wahrnehmbar sind.

Hierdurch können während des landwirtschaftlichen Arbeitseinsatzes des Nutzfahrzeugs viele zusätzliche Informationen, wie etwa agronomische Daten, in das Sichtfeld des Fahrers eingeblendet werden. Die Informationen können auf diese Weise schneller und effizienter erfasst werden. Der Benutzer oder Fahrer wird weniger abgelenkt, da er die gewünschten oder benötigten Informationen nicht mehr an verschiedenen in der Fahrerkabine verteilten Anzeigeeinheiten, Displays oder dergleichen erfassen (insbesondere ablesen) muss. Dies kann auch einer etwaigen vorzeitigen Ermüdung vorbeugen.

Somit können die auf Basis der erfassten Daten erforderlichen Entscheidungen während des Arbeitseinsatzes stressfreier getroffen werden. Der eigentliche landwirtschaftliche Arbeitseinsatz kann wesentlich komfortabler und effizienter durchgeführt werden. Auch eine während des Arbeitseinsatzes erforderliche Kommunikation mit Dritten kann mittels des Verfahrens einfacher und effizienter durchgeführt werden. Insgesamt steigen die Arbeitsqualität während des Arbeitseinsatzes und die allgemeine Arbeitsproduktivität.

Die Projektionstechnologie zur Projizierung der optischen Informationen kann auch dazu verwendet werden, vor den Augen des Benutzers eine virtuelle Benutzerschnittstelle (z.B. virtuelle Anzeige- und/oder Bedieneinheit zur Eingabe und/oder Auswahl und/oder Anzeige von Daten) zu projizieren. Virtuelle manuelle Befehlseingaben an dieser virtuellen Benutzerschnittstelle durch den Benutzer können mittels einer insbesondere an der Wahrnehmungsvorrichtung selbst angeordneten geeigneten Sensorik erfasst werden.

Die vorgenannte virtuelle Benutzerschnittstelle kann auch zur Darstellung und Bearbeitung von Daten bzw. Informationen eines mobilen Endgerätes (z.B. Smartphone, Tablet) des Benutzers verwendet werden. Hierbei ist das mobile Endgerät entweder mit dem Datenkommunikationssystem oder unmittelbar mit der Steuereinheit datentechnisch verbunden. Die Steuereinheit generiert dann die optischen Daten für die virtuelle Benutzerschnittstelle.

Alternativ kann die Steuereinheit die Daten bzw. Informationen des mobilen Endgerätes an einer im landwirtschaftlichen Nutzfahrzeug physisch vorhandenen Benutzerschnittstelle abbilden.

Vorzugsweise weist die Wahrnehmungsvorrichtung eine persönlich tragbare Sichteinheit (z.B. brillenartige Vorrichtung, am Kopf tragbare Sichtscheibe). Insbesondere besteht die Wahrnehmungsvorrichtung aus einer solchen Sichteinheit. Die persönlich tragbaren Eigenschaften der Sichteinheit ermöglichen dem Anwender ein besonders flexibles Datenmanagement während des Arbeitseinsatzes.

Alternativ oder zusätzlich weist die Wahrnehmungsvorrichtung eine Sichtscheibe (insbesondere Frontscheibe) einer Kabine des Nutzfahrzeugs auf. Insbesondere besteht die Wahrnehmungsvorrichtung aus einer solchen Sichtscheibe. Eine derartige Sichtscheibe wirkt in einer zusätzlichen Funktion als eine komfortable Informationsoberfläche, deren Informationen in die vom Anwender wahrgenommene reale Umgebung eingebunden werden können.

Die datentechnische Verbindung zwischen dem Datenkommunikationssystem des landwirtschaftlichen Nutzfahrzeug und der Wahrnehmungsvorrichtung mittels der Steuereinheit ermöglicht eine komfortable optische Darstellung einer großen Anzahl unterschiedlicher Daten für den Anwender oder Fahrer. Vorzugsweise enthält das Datenkommunikationssystem mindestens eine der folgenden Gruppen von Daten:
- Agronomische Daten, welche agronomische Merkmale des aktuellen geographischen Einsatzgebietes des Nutzfahrzeugs repräsentieren. Dies sind beispielsweise Daten bzw. Karten des aktuell zu bearbeitenden Feldes und unmittelbar benachbarter Felder, wie etwa bezüglich der Topographie, der letzten Ernte, der letzten Feld- oder Unkrautbearbeitung, des Pflanzenwachstums, der Feuchtigkeit, der Nährstoffversorgung oder der Bodenart.
- Arbeitsdaten, welche Merkmale des aktuellen Arbeitseinsatzes des Nutzfahrzeugs repräsentieren. Dies sind beispielsweise Daten bzw. Karten bezüglich der Feldgrenzen des aktuell zu bearbeitenden Feldes oder eines bereits bearbeiteten Feldes bzw. Feldabschnitts, einer vorgeplanten Arbeitsstrecke für das Nutzfahrzeug oder spezifischer Arbeitsvorschriften für den Arbeitseinsatz.
- Logistikdaten, welche Merkmale mindestens eines Objekts oder Hindernisses in dem aktuellen geographischen Einsatzgebiet repräsentieren. Dies sind beispielsweise Daten bzw. Karten bezüglich einer Echtzeit-Lokalisierung und Status-Information zusammenarbeitender landwirtschaftlicher Nutzfahrzeuge, etwaiger Hindernisse in dem aktuellen Arbeitsgebiet, nicht-passierbarer Bereiche in dem aktuellen Arbeitsgebiet oder Straßen, Wegen oder Gebäuden in dem aktuellen Arbeitsgebiet.
- Positionsdaten, welche eine geographische Position des Nutzfahrzeugs repräsentieren. Dies sind beispielsweise Daten einer GPS-Empfangsantenne.
- Ausrichtungsdaten, welche eine Ausrichtung des Nutzfahrzeugs oder seiner Fahrzeugkabine relativ zu dem aktuellen geographischen Einsatzgebiet, insbesondere relativ zu einer Bezugsgeraden (z.B. Erdhorizontale) oder Bezugsebene (z.B. Erdhorizontalebene) im Einsatzgebiet repräsentieren. Dies sind beispielsweise Daten einer Sensorik mit einem oder mehreren Neigungssensor(en) am Nutzfahrzeug, welche eine Ausrichtung bzw. Neigung der Fahrzeugkabine bzw. des Nutzfahrzeugs im Einsatzgebiet (Feld, Acker, etc.) erfasst.
- Lagedaten, welche eine Lage der Wahrnehmungsvorrichtung relativ zum Nutzfahrzeug bzw. zur Fahrzeugkabine repräsentieren. Dies sind beispielsweise Daten einer Sensorik, welche eine Nachverfolgung der aktuellen Lage (insbesondere Position und/oder Ausrichtung bzw. Neigung) der Wahrnehmungsvorrichtung relativ zum Nutzfahrzeug, insbesondere zur Fahrzeugkabine ermöglicht. Hierdurch können Änderungen der Arbeitsposition des Anwenders bei der Projizierung der optischen Informationen berücksichtigt werden.

Eine Verarbeitung vorgenannter Daten und deren Darstellung als optische Informationen mittels der Wahrnehmungsvorrichtung bietet während eines aktuellen Arbeitseinsatzes mit dem landwirtschaftlichen Nutzfahrzeug eine signifikante Unterstützung für das Datenmanagement.

Beispielsweise können während des Arbeitseinsatzes interessierende Objekte (z.B. zusammenarbeitende Nutzfahrzeuge, Hindernisse) angezeigt werden. Insbesondere können sie optisch hervorgehoben werden, z.B. mittels einer projizierter Farbänderung des betreffenden Objekts. Eine projizierte optische Markierung kann ein Objekt repräsentieren und derart projiziert werden, dass die Projektionsposition aus Sicht des Anwenders bzw. Betrachters der tatsächlichen Position in der realen Umgebung entspricht. Verschiedene Objekte können als unterschiedliche Markierungen (z.B. unterschiedliche Farben, Geometrien, Symbole) projiziert werden. Dies hilft der Arbeitsperson, auch bei schwierigen Sichtverhältnissen (z.B. nachts, Nebel, Staub) genaue Kenntnis über die Position relevanter Objekte zu haben.

Die vorgenannten optischen Markierungen können zusätzliche Informationen enthalten. Dies sind beispielsweise wichtige Statusinformationen des jeweiligen Objekts (z.B. Füllstand eines Erntebehälters, technische Probleme).

Zudem ist es anhand der erwähnten Datenverarbeitung möglich, Merkmale und Informationen des aktuellen Arbeitseinsatzes zu projizieren. Beispielsweise kann die Arbeitsperson virtuelle Linien oder Kurven betrachten, welche die Grenzen des aktuellen Arbeitsgebietes (z.B. Getreidefeld, Acker) darstellen. Auch eine vorgeplante bzw. vorgeschlagene Arbeitsstrecke für das Nutzfahrzeug kann auf diese Weise angezeigt werden.

Während Nachtarbeiten ist es möglich, die wahrnehmbare Umgebung innerhalb des aktuellen Arbeitsfeldes deutlich zu vergrößern im Vergleich zu einer Nachtbeleuchtung durch das arbeitende Nutzfahrzeug. Zu diesem Zweck werden beispielsweise Feldwege, Straßen, Feldkonturen und die umgebende horizontale Silhouette projiziert.

Wie bereits erwähnt, werden spezifische Daten des Datenkommunikationssystems in der Steuereinheit verarbeitet. Während dieser Datenverarbeitung werden vorzugsweise einzelnen ausgewählten Daten ergänzende Geo-Referenzdaten (z.B. topographische Daten) zugeordnet, welche eine reale geographische Position der zu projizierenden optischen Information repräsentieren. Die Geo-Referenzdaten sind vorzugsweise ebenfalls im Datenkommunikationssystem enthalten und hierdurch für die Steuereinheit datentechnisch einfach zugänglich.

Geo-Referenzdaten können auf Basis von Positionsdaten generiert werden, welche beispielsweise von einem Positionserfassungssystem (z.B. GPS) stammen und in dem Datenkommunikationssystem zur Verfügung stehen. Außerdem können als Geo-Referenzdaten insbesondere bereits vorhandene bzw. abgespeicherte und wieder abrufbare digitale topographische Karten verwendet werden, welche beispielsweise Oberflächenformen beinhalten.

Die Verwendung der Geo-Referenzdaten ermöglicht eine geographische Differenzierung verschiedener Daten, welche als unterschiedliche optische Informationen projiziert werden sollen. Insbesondere können mittels der Geo-Referenzdaten geographisch unterschiedliche optische Informationen als unterschiedliche räumliche Relativanordnung bezüglich der Wahrnehmungsvorrichtung projiziert werden. Der Betrachter der Wahrnehmungsvorrichtung erhält dann einen räumlichen Eindruck von den optischen Informationen und kann diese folglich noch einfacher erfassen.

Verschiedene agronomische Daten bzw. Karten können unter Verwendung von Geo-Referenzdaten projiziert und hierdurch als dreidimensionale Darstellung wahrgenommen werden. Gleiche Werte innerhalb der dargestellten spezifischen agronomischen Daten können beispielsweise auf Basis eines Farbschemas mit gleicher Farbe projiziert werden. Der Anwender kann vorzugsweise über eine Benutzerschnittstelle (z.B. Eingabe- und Anzeigeeinheit) auswählen, welche agronomischen Daten bzw. welche agronomische Karte projiziert werden soll.

Die Steuereinheit kann vollständig innerhalb oder außerhalb des landwirtschaftlichen Nutzfahrzeugs angeordnet sein. Alternativ kann die Steuereinheit funktional und physisch aufgeteilt teilweise innerhalb und teilweise außerhalb des Nutzfahrzeugs bereitgestellt sein.

In einer bevorzugten Ausführungsform ist die Steuereinheit vollständig innerhalb des landwirtschaftlichen Nutzfahrzeugs angeordnet. Beispielsweise kann die Steuereinheit kostengünstig als Bestandteil eines fahrzeugeigenen Steuersystems bereitgestellt werden.

In einer weiteren bevorzugten Ausführungsform ist die Steuereinheit vollständig außerhalb des landwirtschaftlichen Nutzfahrzeugs angeordnet. Beispielsweise ist diese externe Steuereinheit in einer stationären Steuerzentrale (z.B. Computer, Rechenzentrum, Server) integriert. Die Daten des Datenkommunikationssystems werden dann an die stationäre Steuerzentrale gesendet und dort verarbeitet. Die verarbeiteten Daten werden zur Projizierung an die Wahrnehmungsvorrichtung zurückgesendet.

Für eine technisch effiziente Durchführung des Verfahrens ist das landwirtschaftliche Nutzfahrzeug vorzugsweise mit geeigneten Sensoren ausgestattet. Beispielsweise sind ein oder mehrere Neigungssensoren vorgesehen, anhand derer die aktuelle Ausrichtung oder Neigung des Nutzfahrzeugs während des Arbeitseinsatzes (z.B. auf dem Acker oder Getreidefeld) relativ zu einer Bezugsgeraden (z.B. Erdhorizontale) oder Bezugsebene erfasst wird. Außerdem kann das Nutzfahrzeug eine Sensorik enthalten, welche eine Nachverfolgung der aktuellen Lage (insbesondere Position und/oder Ausrichtung und/oder Neigung) der Wahrnehmungsvorrichtung relativ zur Fahrzeugkabine ermöglicht. Weiter vorzugsweise besitzt das Nutzfahrzeug eine Empfangsantenne (z.B. GPS-Empfänger) zum Empfang der aktuellen Position der Empfangsantenne bzw. des Nutzfahrzeugs. Die Empfangsantenne kann dann deren aktuelle Positionsdaten dem Datenkommunikationssystem zur Verfügung stellen.

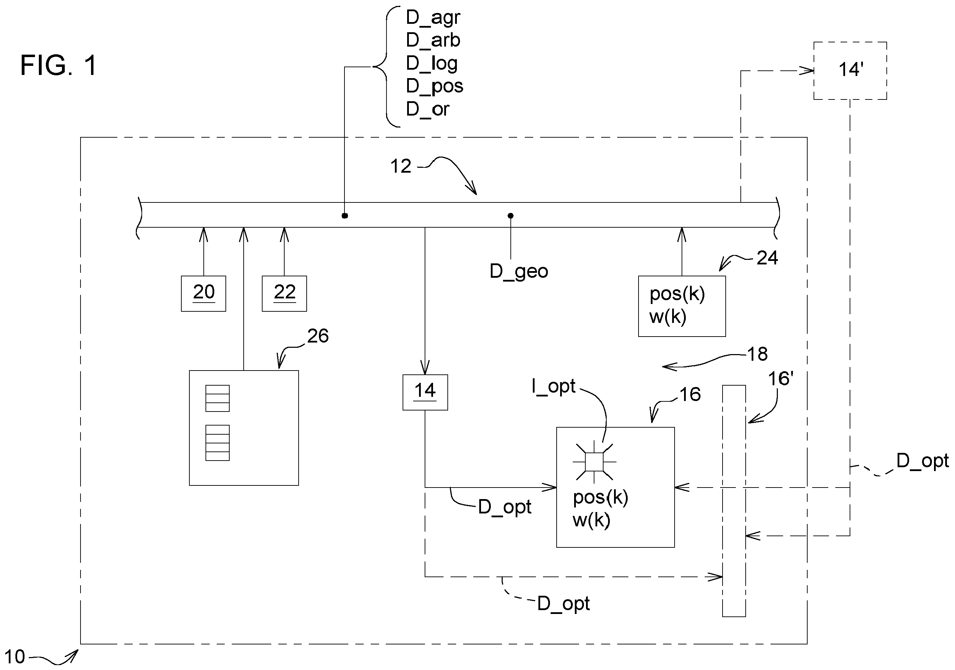

Das erfindungsgemäße Verfahren wird im Folgenden anhand der beigefügten Zeichnung näher erläutert.

Die einzige Zeichnung zeigt schematisch Bestandteile eines landwirtschaftlichen Nutzfahrzeugs 10 (nachfolgend kurz Nutzfahrzeug 10), welches über ein Datenkommunikationssystem 12 verfügt. Letzteres ist vorzugsweise als ein Bussystem (z.B. ISO, CAN) ausgebildet. Verschiedene Daten des Datenkommunikationssystem 12 werden in einer Steuereinheit 14 verarbeitet und als optische Daten D_opt an eine Wahrnehmungsvorrichtung 16 gesendet.

Die Wahrnehmungsvorrichtung 16 ist als eine vom Anwender oder Fahrer persönlich tragbare Sichteinheit (z.B. spezielle Brille) ausgebildet und hier lediglich schematisch dargestellt. Die Wahrnehmungsvorrichtung 16 projiziert von der Steuereinheit 14 empfangene optische Daten D_opt als optische Informationen I_opt derart, dass der Anwender (z.B. Fahrzeugführer) mittels der Wahrnehmungsvorrichtung 16 die reale Umgebung des Nutzfahrzeugs 10 und die optische(n) Information(en) I_opt gemeinsam wahrnimmt.

Alternativ oder zusätzlich ist eine Wahrnehmungsvorrichtung 16' vorgesehen. Sie ist als eine Sichtscheibe einer Fahrzeugkabine 18 des Nutzfahrzeugs 10 ausgebildet und schematisch strichliniert dargestellt. Bei der Sichtscheibe 16' handelt es sich insbesondere um eine Frontscheibe der Fahrzeugkabine 18. Bei einer Verwendung der Sichtscheibe 16' als Wahrnehmungsvorrichtung empfängt diese optische Daten D_opt von der Steuereinheit 14 und projiziert die optischen Daten D_opt als optische Informationen I_opt.

In der dargestellten Ausführungsform ist die Steuereinheit 14 innerhalb des Nutzfahrzeugs 10 integriert. Hierbei ist die Steuereinheit 14 beispielsweise als Mikroprozessoreinheit oder dergleichen ausgebildet.

Alternativ ist die Steuereinheit 14 durch eine bezüglich des Nutzfahrzeugs 10 extern angeordnete Steuereinheit 14' ersetzt oder ergänzt. Diese externe Steuereinheit 14' ist durch Strichlinien angedeutet und vorzugsweise Bestandteil einer stationären Steuerzentrale. Die externe Steuereinheit 14' arbeitet grundsätzlich wie die interne Steuereinheit 14, d.h. verschiedene Daten des Datenkommunikationssystem 12 werden in der Steuereinheit 14' verarbeitet und als optische Daten D_opt an die Wahrnehmungsvorrichtung 16 und/oder 16' gesendet.

An dem Datenkommunikationssystem 12 stehen unterschiedliche Daten und/oder Datengruppen an. Mit D_agr sind agronomische Daten bezeichnet, welche agronomische Merkmale des aktuellen geographischen Einsatzgebietes des Nutzfahrzeugs 10 repräsentieren. Mit D_arb sind Arbeitsdaten bezeichnet, welche Merkmale des aktuellen Arbeitseinsatzes des Nutzfahrzeugs 10 repräsentieren. Mit D_log sind Logistikdaten bezeichnet, welche Merkmale mindestens eines Objekts (z.B. weitere arbeitende Nutzfahrzeuge oder Hindernisse) in dem aktuellen geographischen Einsatzgebiet repräsentieren. Mit D_pos sind Positionsdaten bezeichnet, welche eine geographische Position des Nutzfahrzeugs 10 repräsentieren. Zu diesem Zweck kann das Datenkommunikationssystem 12 auf die Daten einer Positionsantenne 20 (z.B. GPS-Empfänger) des Nutzfahrzeugs 10 zugreifen. Mit D_or sind Ausrichtungsdaten bezeichnet, welche eine Ausrichtung (z.B. Lage, Neigung) des Nutzfahrzeugs 10 oder seiner Fahrzeugkabine 18 relativ zu dem aktuellen geographischen Einsatzgebiet repräsentieren. Zu diesem Zweck kann das Datenkommunikationssystem 12 auf die Daten einer Sensorik 22 zugreifen. Die Sensorik 22 enthält insbesondere einen oder mehrere Neigungssensor(en).

Mittels einer geeigneten Lagesensorik 24 wird eine aktuelle Relativlage der Wahrnehmungsvorrichtung 16 relativ zur Fahrzeugkabine 18 erfasst und als Lagedaten an das Datenkommunikationssystem 12 weitergegeben. Die Lagedaten enthalten vorzugsweise eine Position pos(k) und eine Ausrichtung bzw. einen Neigungswinkel w(k) der Wahrnehmungsvorrichtung 16 relativ zur Fahrzeugkabine 18.

Weiterhin liegen am Datenkommunikationssystem 12 Geo-Referenzdaten D_geo (z.B. Daten aus digitalen Topographiekarten) an, welche ebenfalls in der Steuereinheit 14 verarbeitet werden und eine räumliche Darstellung verschiedener optischer Informationen I_opt unterstützen. Dabei können insbesondere den Daten D_agr, D_arb und D_log spezifische Geo-Referenzdaten D_geo zugeordnet werden. An einer Benutzerschnittstelle 26 kann der Anwender beispielsweise auswählen, welche agronomischen Daten bzw. welche agronomische Datenkarte in der Steuereinheit 14 bzw. 14' verarbeitet werden soll und mittels zugeordneter Geo-Referenzdaten D_geo räumlich projiziert werden soll.

## Patentansprüche

1. Verfahren zur Wahrnehmung einer erweiterten Realität während eines Arbeitseinsatzes eines landwirtschaftlichen Nutzfahrzeuges (10), wobei
- Daten (D_agr, D_arb, D_geo, D_log, D_or, D_pos, pos(k), w(k)) eines Datenkommunikationssystems (12) des landwirtschaftlichen Nutzfahrzeugs (10) in einer Steuereinheit (14, 14') verarbeitet werden,
- die Steuereinheit (14, 14') verarbeitete Daten (D_opt) an eine Wahrnehmungsvorrichtung (16, 16') sendet,
- die Wahrnehmungsvorrichtung (16, 16') von der Steuereinheit (14, 14') empfangene Daten (D_opt) als eine optische Information (I_opt) projiziert, und
- mittels der Wahrnehmungsvorrichtung (16, 16') die reale Umgebung des landwirtschaftlichen Nutzfahrzeugs (10) und die projizierte optische Information (I_opt) gemeinsam wahrnehmbar sind.

2. Verfahren nach Anspruch 1, **dadurch gekennzeichnet, dass** die Wahrnehmungsvorrichtung eine persönlich tragbare Sichteinheit (16) aufweist oder aus einer solchen besteht.

3. Verfahren nach Anspruch 1 oder 2, **dadurch gekennzeichnet, dass** die Wahrnehmungsvorrichtung eine Sichtscheibe (16'), insbesondere Frontscheibe, einer Fahrzeugkabine (18) des Nutzfahrzeugs (10) aufweist oder aus einer solchen besteht.

4. Verfahren nach einem der vorhergehenden Ansprüche, **dadurch gekennzeichnet, dass** die Daten des Datenkommunikationssystems (12) mindestens eine der folgenden Datengruppen enthalten:
- agronomische Daten (D_agr), welche agronomische Merkmale des aktuellen geographischen Einsatzgebietes des Nutzfahrzeugs (10) repräsentieren,
- Arbeitsdaten (D_arb), welche Merkmale des aktuellen Arbeitseinsatzes des Nutzfahrzeugs (10) repräsentieren,
- Logistikdaten (D_log), welche Merkmale mindestens eines Objekts oder Hindernisses in dem aktuellen geographischen Einsatzgebiet repräsentieren,
- Positionsdaten (D_pos), welche eine geographische Position des Nutzfahrzeugs (10) repräsentieren,
- Ausrichtungsdaten (D_or), welche eine Ausrichtung des Nutzfahrzeugs (10) relativ zu dem aktuellen geographischen Einsatzgebiet repräsentieren,
- Lagedaten (pos(k), w(k)), welche eine Lage der Wahrnehmungsvorrichtung (16) relativ zum Nutzfahrzeug (10) repräsentieren.

5. Verfahren nach einem der vorhergehenden Ansprüche, **dadurch gekennzeichnet, dass** während der Verarbeitung der Daten (D_agr, D_arb, D_log, D_or, D_pos, pos(k), w(k)) in der Steuereinheit (14, 14') einzelnen Daten (D_agr, D_arb, D_log) ergänzende Geo-Referenzdaten (D_geo) zugeordnet werden, welche eine reale geographische Position der zu projizierenden optischen Information (I_opt) repräsentieren.

6. Verfahren nach Anspruch 5, **dadurch gekennzeichnet, dass** die optische Information (I_opt) anhand der zugeordneten Geo-Referenzdaten (D_geo) als eine räumliche Relativanordnung bezüglich der Wahrnehmungsvorrichtung (16, 16') projiziert wird.

7. Verfahren nach einem der vorhergehenden Ansprüche, **dadurch gekennzeichnet, dass** die Steuereinheit (14) innerhalb des Nutzfahrzeugs (10) integriert ist.

8. Verfahren nach einem der vorhergehenden Ansprüche, **dadurch gekennzeichnet, dass** die Steuereinheit (14') außerhalb des Nutzfahrzeugs (10) angeordnet ist.

9. Landwirtschaftliches Nutzfahrzeug (10) zur Durchführung des Verfahrens nach einem der vorhergehenden Ansprüche.
